**Europäisches Patentamt**

**European Patent Office**

**Office européen des brevets**

(19)

(11) Veröffentlichungsnummer : **0 164 304**
**B1**

(12)

# EUROPÄISCHE PATENTSCHRIFT

(45) Veröffentlichungstag der Patentschrift :
19.10.88

(21) Anmeldenummer : **85810155.3**

(22) Anmeldetag : **04.04.85**

(51) Int. Cl.⁴ : **F 16 B 13/14, C 04 B   7/00**

(54) Verankerung eines Verankerungsmittels.

(30) Priorität : 09.05.84 DE 3417171

(43) Veröffentlichungstag der Anmeldung :
**11.12.85 Patentblatt 85/50**

(45) Bekanntmachung des Hinweises auf die Patenterteilung : **19.10.88 Patentblatt 88/42**

(84) Benannte Vertragsstaaten :
**AT BE CH DE FR GB IT LI NL SE**

(56) Entgegenhaltungen :
**AT-B-    357 318**
**AT-B-    357 736**
**DE-A- 1 965 776**
**DE-A- 2 314 562**
**DE-A- 2 659 138**
**DE-A- 2 838 466**
**DE-A- 2 925 197**
**FR-A- 1 459 132**
**US-A- 3 251 701**
**US-A- 3 303 037**
**Rock Bolting, Pergamon Press, S. 27**

(73) Patentinhaber : **HILTI Aktiengesellschaft**
**FL-9494 Schaan (LI)**

(72) Erfinder : **Kousek, Heinz, Dr.**
**Rappenwaldstrasse 11**
**A-6700 Feldkirch (AT)**
Erfinder : **Bindschedler, Daniel, Dr. Chem.**
**Oberstädtle 212**
**FL-9495 Nendeln (LI)**

(74) Vertreter : **Wildi, Roland**
**Hilti Aktiengesellschaft Patentabteilung**
**FL-9494 Schaan (LI)**

## Beschreibung

Die Erfindung betrifft eine Verankerung eines Verankerungsmittels, wie Dübel, Ankerstange und dergleichen in einem Bohrloch, unter Verwendung einer sich zumindest im Ringspalt zwischen der Wandung des Bohrloches und dem Verankerungsmittel befindlichen, quellfähigen hydraulischen Dübelmasse.

Unter Nassmontage oder Klebemontage versteht man herkömmlicherweise Verankerungen, wie beispielsweise die Befestigung von Ankerstangen in Bohrlöchern, bei denen flüssige, härtbare Verguss- oder Haftmassen auf anorganischer und/oder organischer Basis verwendet werden. Die feste Verbindung zwischen Ankerstange und dem festen Aufnahmematerial beruht entweder überwiegend auf Formschluss zwischen einer mehr oder weniger rauhen Bohrlochwand und dem zunächst flüssigen oder pastösen Vergussmaterial, das nach dem Erstarren die Negativ-Form des Bohrloches angenommen hat oder überwiegend auf der adhäsiven Wirkung (Klebewirkung) der erstarrten Verguss- oder Haftmasse an der Bohrlochwand.

Bekannt sind solche Verankerungen aus dem Handbuch ROCKBOLTING von Schach, Garshol und Heltzen (Seite 27), wo Ankerbolzen mittels einer hydraulischen Dübelmasse, der ein Quellmittel zugesetzt ist befestigt werden. Durch die Volumensvergrösserung entsteht in der Dübelmasse eine Druckerhöhung, welche einen Druck auf die Bohrlochwandung ausübt. Dieser Druck kann so gross werden, dass es bei geringen Randabständen der Dübellöcher zu Absprengungen kommt.

Der Erfindung liegt nun die Aufgabe zugrunde, eine Verankerung mittels einer quellfähigen, hydraulischen Dübelmasse zu schaffen, mit der einerseits hohe Auszugswerte und andererseits eine maximale Sicherheit gegen Ueberbelastungen des Aufnahmematerials erreicht werden.

Gemäss der Erfindung wird dies dadurch erreicht, dass das Verhältnis zwischen der Querschnittsfläche des Verankerungsmittels und des Bohrloches derart ausgebildet ist, dass die Querschnittsfläche des dazwischen verbleibenden Ringspaltes höchstens 200 mm² beträgt.

Ueberraschenderweise gelingt es auf dem erfindungsgemässen Wege tatsächlich, hohe Auszugswerte und maximale Verankerungssicherheit zu erreichen, da Formschluss, adhäsive Befestigung und spreizdübelartiger Reibschluss gegeben sind. Die optimalen Ergebnisse sind zu einem wesentlichen Teil auf die verwendeten, unter Aushärtebedingungen aufquellenden hydraulischen Dübelmassen zurückzuführen.

Zur Herstellung der erfindungsgemäßen Verankerung wird im allgemeinen so vorgegangen, daß zunächst ein Bohrloch im Aufnahmewerkstoff vorgesehen wird. In dieses Bohrloch kann dann die quellfähige hydraulische Dübelmasse vor, während oder nach dem Einbringen des Verankerungsmittels eingebracht werden. Zweckmässig ist die Einbringung der Dübelmasse vor oder auch noch während des Einbringens des Verankerungsmittels, also z. B. gleichzeitig mit dem Verankerungsmittel. Unter hydraulischer Dübelmasse versteht man solche Dübelmassen, die nach Zugabe von Wasser im Zeitraum von etlichen Minuten bis mehreren Tagen insbesondere innerhalb einiger Stunden irreversibel erhärten. Sie enthalten, neben sonstigen Bestandteilen hydraulisch abbindende Bestandteile. Die hydraulischen Dübelmassen kommen in aller Regel in flüssiger oder pastöser Form zum Einsatz, d. h. sie enthalten bereits das für die hydraulische Abbindereaktion erforderliche Anmachwasser. Die weiter enthaltenen quellfähigen Bestandteile sind regelmäßig und ganz bevorzugt solche, die mit Wasser aufquellen. Die Dübelmassen erfahren dann eine Volumenvergrößerung über das beim Anmachen eingenommene Volumen. Im allgemeinen wird so vorgegangen, daß die quellfähigen hydraulischen Dübelmassen zumindest mit den für die hydraulische Abbindung und für die Quellung erforderlichen Wassermengen d. h. als flüssige bis pastöse Masse in die Bohrlöcher eingebracht werden.

Bei der erfindungsgemäßen Verankerung ist darauf zu achten, daß die Flächendifferenz zwischen der Querschnittsfläche des Bohrlochs und der Querschnittsfläche des Verankerungsmittels, d. h. die Stirnfläche des Ringspalts zwischen Verankerungsmittel und Bohrloch, auf höchstens etwa 200 mm² eingestellt wird. Bei der Bestimmung dieses Wertes kommt es dabei nicht so sehr auf die bei Bohrlöchern im Außenbereich bisweilen auftretenden Trichter oder kraterförmigen Teile, als vielmehr auf die in ausbruchfreien tieferen Teilen gelegenen, dort ermittelbaren Werte an. Wenn auch über den angegebenen Bereich noch eine gewisse Toleranzgrenze gegeben ist, so hat sich jedoch gezeigt, daß bei wesentlicher Überschreitung des angegebenen Bereichs eine sichere Verankerung nicht immer gewährleistet werden kann.

Als Verankerungsmittel können im Sinne der vorliegenden Erfindung alle üblichen Verankerungsmittel verwendet werden, aus unterschiedlichen Werkstoffen wie Metall, Kunststoff und dergleichen, wobei Metall häufig bevorzugt ist. Zu den Verankerungsmitteln gehören insbesondere Dübel aller Art, Metallanker, insbesondere Schwerlastanker unterschiedlichster Ausgestaltung, insbesondere Ankerstangen, beispielsweise zylindrische Ankerstangen, Mehrkantankerstangen, Ankerstangen mit profilierter insbesondere gekerbter oder genoppter Oberfläche einschließlich Gewindeankerstangen, gegabelte Ankerstangen, insbesondere aber auch Ankerstangen, deren zum Einsetzen in das Bohrloch vorgesehener Teil in Richtung zum Ende hin konisch erweitert ist.

Optimale Ergebnisse werden im Rahmen der vorliegenden Erfindung erzielt, wenn die Setztiefe des Verankerungsmittels im Bohrloch bis zum 10- fachen, vorzugsweise bis zum 6 bis 10-fachen, insbesondere 8-fachen des Durchmessers des Verankerungsmittels beträgt.

Weiter hat es sich als vorteilhaft erwiesen, wenn bei einem Aufnahmewerkstoff der Festigkeitsklasse von kleiner als etwa B 15 (DIN Nr. 1045) Bohrloch und Verankerungsmittel entsprechend einer Flächendifferenz zwischen der Querschnittsfläche des Bohrlochs und der des Verankerungsmittels von kleiner als 180, vorzugsweise von 100 bis 160 mm² für die Stirnfläche des Ringspalts verwendet werden. So genügt es, anstelle der beispielsweise für Beton der Festigkeitsklasse B 15 und darüber verwendbaren höheren Flächendifferenz, bei Aufnahmewerkstoffen niedrigerer Festigkeit mit geringeren Flächendifferenzen zu arbeiten. Solche niedrigeren Flächendifferenzen bei Aufnahmewerkstoffen niedrigerer Festigkeit sind sogar bevorzugt. Dabei können die Ringspalten bzw. die Durchmesser der Stirnfläche durchaus asymmetrisch sein, wie dies in der Praxis sogar regelmäßig der Fall sein wird.

Die hydraulisch abbindende Dübelmasse enthält neben dem hydraulischen Bindemittel-Bestandteil, zumindest einen quellfähigen Bestandteil, welcher nach Art und Menge der abgebundenen Dübelmasse bei unbehinderter Ausdehnung ein größeres Volumen verleiht als das Volumen der einsatzfertigen, also bereits das Anmachwasser enthaltenden Volumen der Ausgangsmasse.

Quellfähige, hydraulisch abbindende Zubereitungen als solche sind zwar schon seit vielen Jahren bekannt. Sie dienen im allgemeinen jedoch zur Herstellung vorgespannter Konstruktionen, dem sogenannten Spannbeton, oder aber auch zum Ausgleich des beim Abbinden hydraulischer Massen häufig auftretenden Schwindens. Quellfähige hydraulische abbindende Massen sind meist auf der Basis von Zementen, insbesondere Portlandzement oder Tonerdezement, aufgebaut und enthalten einen quellfähigen Bestandteil. Derartige Massen sind beispielsweise in der französischen Patentschrift 1 459 132, in der britischen Patentschrift 1 083 727, in den deutschen Patentschriften 20 23 695 und 23 14 562, in den US-Patentschriften 3 155 526, 3 251 701, 3 303 037 und, soweit es einen quellfähigen Zusatz angeht, auch in EP-A-28513 beschrieben. Auf diese Literaturstellen wird ausdrücklich zur Vermeidung einer Aufzählung der verwendbaren Massen verwiesen.

Die quellfähigen hydraulischen Dübelmassen enthalten als wesentliche Bestandteile einen hydraulisch abbindenden Bestandteil sowie einen quellfähigen, auf das abgebundene Endprodukt volumenvergrößernd wirkenden Bestandteil. Diese beiden wesentlichen Bestandteile können in unterschiedlichen Mengen vorhanden sein, wobei sowohl das hydraulische Bindemittel als auch der Quellbestandteil die größere Gewichtsmenge ausmachen können. Dies hängt von den jeweils gewünschten Eigenschaften ab. Die Volumenvergrößerung tritt natürlich nur dann auf, wenn ein entsprechender Ausdehnungsraum zur Verfügung steht. Andernfalls werden in der Masse bzw.

dem abgebundenen Formling erhebliche Innendrücke aufgebaut, die etwaige spätere, auch geringfügige Expansionsmöglichkeiten sofort volumenvergrößernd ausnutzen.

Es ist regelmäßig davon auszugehen, daß die Dübelmassen als quellfähige Bestandteile mit Wasser volumenvergrößernde Substanzen enthalten, d. h. daß der quellfähige Bestandteil seine volumenvergrößernde Wirkung nach Zugabe von Wasser ausübt. Dies hat den Vorteil, daß das gleiche Medium wie für den hydraulischen Abbindevorgang, nämlich Wasser, verwendet werden kann. Aus praktischen Gründen sind demzufolge in den Dübelmassen nur ausnahmsweise volumenvergrößernde quellfähige Substanzen als Bestandteil enthalten, die mit anderen Zusatzstoffen, wie einwertigen oder mehrwertigen Alkoholen aufquellen. Dagegen sind wäßrig-organische Medien z. B. Wasser-Glykol-Gemische durchaus gängig.

Bei dem hydraulisch abbindenden Bestandteil handelt es sich um die üblichen hierfür bekannten Stoffe, wie beispielsweise Zemente, insbesondere Portlandzement, Eisenportlandzement, Tonerdezement und dergleichen.

Der Wasser-Pulver-Faktor (trockene, pulverförmige Dübelmasse) liegt im allgemeinen zwischen 0,2 bis 0,6, vorzugsweise zwischen 0,2 und 0,5, insbesondere zwischen 0,25 und 0,35.

Das komplexe Zusammenspiel des expandierenden Quellvorgangs und des hydraulischen Abbindevorgangs ist wissenschaftlich noch nicht geklärt. Es wird angenommen, daß ein wesentlicher Teil der expansiven Kräfte auf ein schon in erheblichem Umfang hydraulisch abgebundenes System oder Skelett einwirkt und so neben der Volumenvergrößerung auch die erhebliche innere Vorspannung mitbewirkt.

Besonders bevorzugt sind solche Dübelmassen, welche CaO als den nach Wasserzusatz Quellung bewirkenden Bestandteil enthalten. wegen der leichten Zugänglichkeit als auch wegen der zuverlässigen Expansionswirkung ist CaO in besonderem Maße geeignet. Es handelt sich hierbei insbesondere um Branntkalk, also um ein durch Brennen von Calciumkarbonat erzeugtes Produkt. Bevorzugt ist in den Dübelmassen ein zwischen 1 100 und 1 600 °C gebranntes CaO (Mittelbrand bis Hartbrand).

Dabei nimmt die Expansionskraft mit sinkender Brenntemperatur des Kalks ab. Andererseits wird die Reaktion auch mit zunehmender Mahlfeinheit erhöht. Neben der Teilchengröße hat auch das Porenvolumen des CaO Einfluß auf das Quellungsverhalten. Das Porenvolumen des eingesetzten CaO beträgt vorzugsweise 5-50, insbesondere 8-30 %. Weiter können die Quellungseigenschaften auch über die Brennatmosphäre beeinflußt werden. So verzögert beispielsweise eine reduzierende Brennatmosphäre die Quellungsgeschwindigkeit eines so gebrannten Kalks.

Wenn auch häufig der quellfähigkeitsverleihende Bestandteil in geringerer Gewichtsmenge als das hydraulische Bindemittel vorhanden sein wird, und der quellfähigkeitsverleihende Anteil meist unter 50 Gew.-%, insbesondere zwischen 15 und 30 Gew.-%, jeweils bezogen auf das Gesamtgewicht der Dübelmässe, liegen darf, so können die Dübelmassen, in Abhängigkeit von der jeweils gewünschten Quellungscharakteristik auch höhere Gewichtsanteile an quellfähigkeitsverleihenden Bestandteilen, z. B. 20-85 Gew.-% oder an hydraulischen Bindemitteln, z. B. 10-50 Gew.-% enthalten. Eine Dübelmasse kann danach jeweils bezogen auf das Gesamtgewicht, z. B. folgende Zusammensetzung aufweisen.

22-85 Gew.-% CaO

12-76 Gew.-% hydraulisches Bindemittel

0-2 Gew.-% Additive (Quellverzögerer, Schnellabbinder, Betonverflüssiger, usw.)

0-10 Gew.-% Füllmittel (Sand usw.).

Als Quellfähigkeit verleihende Verbindungen können aber auch anstelle oder neben CaO Verbindungen wie MgO, Gips und/oder im wesentlichen ungesinterte Verbindungen mit den Kom-ponenten CaO, $Al_2O_3$ und/oder $CaSO_4$ enthalten sein. Dabei weisen MgO und Gips eine verzögernde Quellungscharakteristik bei vergleichsweise mäßiger Expansionskraft auf.

Zur Steuerung der Vorgänge können in den Dübelmassen natürlich auch besondere, den zeitlichen Ablauf der Quellung und der hydraulischen Abbindung beeinflussende Substanzen enthalten sein. So können beispielsweise quellungsverzögernde oder die hydraulische Abbindung beschleunigende Bestandteile eingebracht sein. Beispiele für quellungsverzögernde Substanzen sind Kaliumfluorid, Calciumfluorid, Calciumste-arat, Fettsäureglyceride und/oder Zucker. Beispiele für quellungsbeschleunigende Verbindungen sind Chloride, organische Netzmittel, Natriumhydroxid, Glykole und dergleichen. Zur Beschleunigung des hydraulischen Härtevorgangs können die für hydraulische Massen üblichen Schnellbindezusätze, wie beispielsweise Chloridzusätze für Portlandzement und dergleichen verwendet werden.

Die Dübelmassen können schließlich übliche Zusatzmittel, wie Füllmittel, z. B. Sand, die reologischen Eigenschaften beeinflussenden Mittel wie Verflüssiger, z. B. Produkte auf Melaminharz-basis, viskositätsbeeinflussende Mittel, Thixotro-pie verleihende Mittel, Netzmittel, $P_H$-Wert beein-flussende Mittel, und dergleichen übliche Zusatzmittel enthalten sein.

Die hydraulischen quellfähigen Dübelmassen können auch organische, härtbare Bestandteile enthalten, insbesondere reaktive ungesättigte Po-lyester, Polyurethan-Bildungskomponenten, Epo-xidharze und dergleichen. Damit läßt sich z. B. die Härtungscharakteristik im Sinne der schnellen Erzielung funktioneller Fertigkeiten beeinflussen.

Bei Herstellung der erfindungsgemäßen Verankerung mit den genannten quellfähigen hydraulischen Dübelmassen wird im allgemeinen nach etlichen Stunden bzw. einigen Tagen der konstante Höchstdruck im Bohrloch erzielt. Bei Auszugsversuchen zur Bestimmung des Kraft/Weg-Verlaufs wird eine nahezu rechteckförmige Kennlinie erzielt. Bei Setztiefen von ca. 80 mm ergibt sich Kegelausbruch oder Stangenbruch beim Auszugsversuch. Bei Setztiefen von 110 mm oder bei Ankerstangen mit Konuserweiterung zum bohrlochgrundseitigen Ende hin tritt, selbst mit hoch-festen Stangen Stangenbruch beim Auszugsver-such ein. Diese Ergebnisse sind unabhängig von der Anwesenheit von Bohrmehl oder Ölresten im Bohrloch. Treten, auch nach einiger Zeit, irgendwelche Änderungen am Bohrloch auf, z. B. Rißbildung oder dergleichen, so erfolgt ein sofortiges Nachspreizen bzw. Ausfüllen des Risses durch die unter Vorspannung stehende Dübelmasse. Die Dübelmasse stellt also eine Art chemischen Kraft/Wegspeicher dar.

Die Dübelmassen können als fertig gemischte Pulvermassen, zum Versetzen mit Wasser, in Bulk-Form oder als Dosiereinheiten, abgepackt in Beutel, Becher und dergleichen Behältnisse aus Kunststoff, Papier usw. konfektioniert sein. Besonders bevorzugt sind die bekannten Zweikammerpatronen aus Kunststoff und/oder Glas, welche das Pulver und das erforderliche Anmachwas-ser durch unter Anwendungsbedingungen zer-störbare Kammerwandungen getrennt enthalten.

Das Einführen der Ankerstange kann z. B. von Hand, gegebenenfalls durch drehende und/oder schlagende Bewegung unterstützt erfolgen. Es können Zentrierhilfsmittel aus Holz, insbesondere Kunststoff, z. B. Kunststoffringe, verwendet werden, die auch wieder entfernbar sein können.

## Beispiel 1

In einen Beton der Festigkeit B25 wird zum Setzen einer zylindrischen Ankerstange eines Durchmessers von 12 mm mit einem 16 mm-Bohrer ein Bohrloch einer Tiefe von 100 mm gebohrt. Es wird dann gegebenenfalls nach Entfernen des Bohrkleins eine quellfähige, hydraulische Dübelmasse mit einem Wassergehalt von 30 Gew.-% eingebracht. Der Bedarf an Dübelmasse beträgt ungefähr 15 cm³. Dann wird die Ankerstange zentriert ins Bohrloch gesteckt.

Zur Zentrierung kann z. B. ein Plastikring verwendet werden (Durchmesser innen etwas mehr als 12 mm, außen weniger als 16 mm), der nach Verfestigung der Dübelmasse gegebenenfalls wieder entfernt werden kann. Nach Abwarten einer Verfestigungszeit von ca. einer halben Stunde, kann nach einer weiteren halben Stunde der Dübel belastet werden, wobei in Abhängigkeit von den jeweiligen Bedingungen diese Zeiten auch verkürzt werden können.

## Beispiel 2

Die Dübelmasse besteht aus 50 Gew.-% ungelöschtem Weißkalk (vorzugsweise mit einer chemischen Zusammensetzung gemäß SIA 215) hergestellt bei einer Brenntemperatur von 1 350 °C und einer Brenndauer von 60 h mit einer Mahlfeinheit von 1,7 m²/g, 49 Gew.-% Portlandzement (z. B. Typ HPC gemäß SIA 215) und 1 Gew.-% eines Betonverflüssigers (z. B. auf Melaminharzbasis ; im Handel unter der Bezeichnung Melmet F 10).

Die Bestandteile werden gemischt, z. B. in einer Pulverflasche mit 3-4-fachem Volumen des Pulvervolumens während 30 s bis 1 min geschüttelt. Anschließend werden, bezogen auf die Pulvermenge, 30 Gew.-% Wasser mit einer Temperatur von ca. 16 °C, bezogen auf eine Raumtemperatur von 20 °C, dazugegeben und es wird mit einem Rührstab ca. 1 min lang umgerührt, so daß eine homogene Masse entsteht. Jetzt wird die Masse sofort in das Bohrloch gemäß Beispiel 1 eingefüllt und die dort beschriebene Ankerstange eingeführt.

**Patentansprüche**

1. Verankerung eines Verankerungsmittels, wie Dübel, Ankerstange und dergleichen in einem Bohrloch unter Verwendung einer sich zumindest im Ringspalt zwischen der Wandung des Bohrloches und dem Verankerungsmittel befindlichen, quellfähigen hydraulischen Dübelmasse, dadurch gekennzeichnet, dass das Verhältnis zwischen der Querschnittsfläche des Verankerungsmittels und des Bohrloches derart ausgebildet ist, dass die Querschnittsfläche des dazwischen verbleibenden Ringspaltes höchstens 200 mm² beträgt.

2. Verankerung nach Anspruch 1, dadurch gekennzeichnet, dass bei einem Aufnahmewerkstoff der Festigkeitsklasse von kleiner als B15 die Flächendifferenz zwischen der Querschnittsfläche des Bohrloches und des Verankerungsmittels weniger als 180, vorzugsweise 100 bis 160 mm² beträgt.

3. Verankerung nach Anspruch 1 oder 2, dadurch gekennzeichnet, dass die sich im Bereich des Ringspaltes befindliche Setztiefe des Verankerungsmittels das 6- bis 10-fache, insbesondere das 8-fache des Durchmessers des Verankerungsmittels beträgt.

4. Verankerung nach einem der Ansprüche 1 bis 3, dadurch gekennzeichnet, dass die Dübelmasse als quellfähigen Bestandteil CaO enthält.

5. Verankerung nach einem der Ansprüche 1 bis 4, dadurch gekennzeichnet, dass in der Dübelmasse als quellfähiger volumenvergrössernder Bestandteil MgO, Gips und/oder im wesentlichen ungesinterte Verbindungen mit den Komponenten CaO, Al₂O₃ und/oder CaSO₄ enthalten ist.

6. Verankerung nach Anspruch 4 oder 5, dadurch gekennzeichnet, dass der in der Dübelmasse enthaltene Quellbestandteil CaO bei Temperaturen zwischen 1 100 und 1 600 °C gebrannt ist.

7. Verankerung nach einem der Ansprüche 1 bis 6, dadurch gekennzeichnet, dass in der Dübelmasse quellungsverzögernde und/oder die hydraulische Masse schnell abbindende Bestandteile enthalten sind.

8. Verankerung nach einem der Ansprüche 1 bis 7, dadurch gekennzeichnet, dass die Masse zur Quellverzögerung Kaliumfluorid, Calciumfluorid, Calciumstearat, Fettsäureglyceride und/oder Zucker enthält.

9. Verankerung nach einem der Ansprüche 1 bis 8, dadurch gekennzeichnet, dass die Dübelmasse als hydraulischen Bestandteil Portlandzement oder Tonerdezement enthält.

**Claims**

1. Anchorage of an anchorage means, such as a dowel, anchor rod and the like in a drill-hole using a swellable hydraulic dowel substance which is disposed at least in the annular gap between the wall of the drill-hole and the anchorage means, characterised in that the ratio between the cross-sectional area of the anchorage means and of the drill-hole is designed in such a way that the cross-sectional area of the annular gap remaining there between amounts at the most to 200 mm².

2. Anchorage according to claim 1, characterised in that in the case of a reception material of the strength class of smaller than B15 the difference in area between the cross-sectional area of the drill-hole and of the anchorage means amounts to less than 180, preferably 100 to 160 mm².

3. Anchorage according to claim 1 or 2, characterised in that the setting depth, present in the region of the annular gap, of the anchorage means amounts to 6 to 10 times, more especially 8 times, the diameter of the anchorage means.

4. Anchorage according to any one of claims 1 to 3, characterised in that the dowel substance contains CaO as swellable constituent.

5. Anchorage according to any one of claims 1 to 4, characterised in that MgO, gypsum and/or substantially unsintered compounds with the components CaO, Al₂O₃ and/or CaSO₄ is contained as swellable volume-enlarging constituent in the dowel substance.

6. Anchorage according to claim 4 or 5, characterised in that the swelling constituent CaO contained in the dowel substance is calcined at temperatures between 1 100 and 1 600 °C.

7. Anchorage according to any one of claims 1 to 6, characterised in that swelling-retarding constituents and/or constituents which rapidly set the hydraulic substance are contained in the dowel substance.

8. Anchorage according to any one of claims 1 to 7, characterised in that the substance for retarding the swelling contains potassium fluoride, calcium fluoride, calcium stearate, fatty acid glycerides and/or sugar.

9. Anchorage according to any one of claims 1 to 8, characterised in that the dowel substance contains portland cement or high alumina cement as hydraulic constituent.

**Revendications**

1. Ancrage d'un élément d'ancrage, par exemple d'une cheville, d'une barre d'ancrage et analogue, dans un perçage, avec mise en œuvre d'une masse de cheville hydraulique capable de gonfler et placée du moins dans la fente annulaire entre la paroi du perçage et l'élément d'ancrage, caractérisée en ce que le rapport entre l'aire de la section de l'élément d'ancrage et celle du perçage est tel que l'aire de la section de la fente annulaire subsistant entre les deux est au plus égale a 200 mm².

2. Ancrage selon la revendication 1, caractérisé en ce que, pour un matériel de réception de la classe de résistance inférieure à B15, la différence de superficie entre l'aire de la section du perçage et celle de l'élément d'ancrage est inférieure à 180, de préférence de 100 à 160 mm².

3. Ancrage selon l'une des revendications 1 ou 2, caractérisé en ce que, dans la région de la fente annulaire, la profondeur de pose de l'élément d'ancrage est comprise entre 6 et 10 fois, en particulier égale à 8 fois le diamètre de l'élément d'ancrage.

4. Ancrage selon l'une quelconque des revendications 1 à 3, caractérisé en ce que la masse de cheville contient du CaO en tant que constituant gonflable.

5. Ancrage selon l'une quelconque des revendications 1 à 4, caractérisé en ce que la masse de cheville contient en tant que constituant provoquant le gonflement et l'augmentation du volume du MgO, du gypse et/ou des composés sensiblement crus avec les constituants CaO, $Al_2O_3$ et/ou $CaSO_4$.

6. Ancrage selon l'une des revendications 4 ou 5, caractérisé en ce que la partie gonflante CaO continue dans la masse de cheville est cuite à des températures comprises entre 1 100 et 1 600 °C.

7. Ancrage selon l'une quelconque des revendications 1 à 6, caractérisé en ce que la masse de cheville contient des constituants qui retardent le gonflement et/ou provoquent la prise rapide de la masse hydraulique.

8. Ancrage selon l'une quelconque des revendications 1 à 7, caractérisé en ce que la masse destinée à retarder le gonflement contient du fluorure de potassium, du fluorure de calcium, du stéarate de calcium, des glycérides d'acide gras et/ou du sucre.

9. Ancrage selon l'une quelconque des revendications 1 à 8, caractérisé en ce que la masse cheville contient comme élément hydraulique du ciment Portland ou du ciment alumineux.